# EUROPÄISCHE PATENTSCHRIFT

(11) **EP 1 162 633 B1**
(45) Veröffentlichungstag und Bekanntmachung des Hinweises auf die Patenterteilung: **20.07.2005**
(21) Anmeldenummer: 01401153.0
(22) Anmeldetag: 04.05.2001
(51) Int. Cl.: H01B 13/02, H02K 15/04

(54) **Verfahren und Vorrichtung zur Herstellung von Drilleitern**
Manufacturing method and apparatus for transposed conductors
Méthode de fabrication et appareil pour mis en oevre de conducteurs transposés

(30) Priorität: 02.06.2000 DE 10027564
(43) Veröffentlichungstag der Anmeldung: 12.12.2001
(73) Patentinhaber: Nexans, 75008 Paris (FR)
(72) Erfinder: Spichal, Joachim, 34471 Volkmarsen (DE)
(74) Vertreter: Döring, Roger, Dipl.-Ing.

(56) Entgegenhaltungen:
- WO-A-97/32316
- PATENT ABSTRACTS OF JAPAN vol. 2000, no. 06, 22. September 2000 (2000-09-22) & JP 2000 069722 A (FUJI ELECTRIC CO LTD), 3. März 2000 (2000-03-03)

## Beschreibung

Die Erfindung betrifft ein Verfahren zur Herstellung von Drilleitern nach dem Oberbegriff des Anspruchs 1 sowie eine Vorrichtung zur Herstellung von Drilleitern nach dem Oberbegriff des Anspruchs 3.

Aus der GB-PS 969 086 ist eine Vorrichtung zur Herstellung eines zusammengesetzten elektrischen Leiters bekannt, bei der die isolierten Einzelleiter von rechteckigem Querschnitt in parallel nebeneinander liegenden Stapeln ein Röbelwerkzeug durchlaufen. Am Umfang des aus den gestapelten Profildrähten gebildeten Stranges greifen Schieber an, welche den jeweils zuunterst bzw. zuoberst liegenden Profilleiter auf den benachbarten Stapel unter Kröpfung desselben verschieben. Diesen Vorgang, der ein Verdrillen von eckigen Profilleitern ermöglicht, nennt man nach dem Erfinder Röbel Verröbeln, und das Werkzeug wird als Röbelwerkzeug bezeichnet.

Neben den beiden Schiebern zum Verschieben des oberen und unteren Profildrahtes auf den benachbarten Stapel hat das Röbelwerkzeug ferner zwei Drücker, welche jeweils einen Stapel der Einzelleiter nach oben bzw. nach unten drücken. Nach Beendigung dieses Drückvorgangs greifen die Schieber zum Verschieben der Profildrähte in der geschilderten Weise an.

Bei dieser bekannten Vorrichtung ist die Kröpflänge, das ist die Länge von Beginn bis zum Ende einer Kröpfung, verhältnismäßig groß. Hierdurch wird die Wickeleigenschaft insbesondere bei Drilleitern mit einer hohen Anzahl von Profildrähten verschlechtert.

Die Betätigung der Werkzeugelemente erfolgt durch Nocken und Exzenter, deren Synchronisation durch einen Zahnkranz erfolgt.

Eine ähnliche Vorrichtung ist in der WO 97/32316 offenbart. Das seitliche Verschieben der Profilleiter erfolgt durch Scheiben, die jeweils über eine Stange von einem Elektromotor angetrieben werden. Die Scheiben weisen exzentrisch zu ihrer Mittelachse einen drehbar gelagerten Bolzen auf, mit dessen Hilfe das seitliche Verschieben erfolgt. Das Verschieben der Stapel von unten nach oben bzw. von oben nach unten erfolgt durch Federelemente, die ebenfalls von den Elektromotoren beaufschlagt werden.

Um beim Verdrillen bzw. Verröbeln von Profilleitern mit eckigem Querschnitt die Kröpflänge und damit die Schritt- und Schlaglänge des Drilleiters möglichst kurz zu halten und somit seine Wickelbarkeit zu verbessern, ist aus der DE-A-39 23 448 eine Vorrichtung bekanntgeworden, bei welcher jedem Schieber ein Gegenhalter auf der gegenüberliegenden Seite des Drilleiters zugeordnet ist, der in Förderrichtung des Drilleiters zum Schieber versetzt und gegenläufig zu diesem quer zum Drilleiter verschiebbar gelagert ist und synchron zu der Bewegung der Schieber und Drücker angetrieben ist. Schieber, Gegenhalter und Drücker werden durch hydraulische oder pneumatische Antriebe elektronisch gesteuert in Bewegung versetzt.

Der vorliegenden Erfindung liegt die Aufgabe zugrunde, eine Möglichkeit aufzuzeigen, mit welcher die Taktzeit der Werkzeuge und somit die Produktionsgeschwindigkeit gesteigert werden kann.

Diese Aufgabe wird durch die im Kennzeichen des Anspruchs 1 bzw. des Anspruchs 3 erfaßten Merkmale gelöst.

Weitere vorteilhafte Ausgestaltungen der Erfindung sind in den Unteransprüchen erfaßt.

Neben den sich aus der Aufgabenstellung selbst ergebenden Vorteilen werden noch weitere Vorteile erzielt. So lassen sich die Werkzeuge nach der Lehre der Erfindung wesentlich genauer positionieren. Die Rüstzeiten, die notwendig werden, wenn ein Drilleiter mit anderen Abmessungen produziert werden soll, sind wesentlich kürzer, da anstelle der Einstellungen der Werkzeuge nur der Hub bzw. die Drehzahl der Servomotoren verändert werden müssen. Diese Änderungen können durch abgespeicherte Programme vorgenommen werden.

Ein weiterer wesentlicher Vorteil ist noch darin zu sehen, daß nunmehr auch Drilleiter mit sehr kleinen Abmessungen hergestellt werden können.

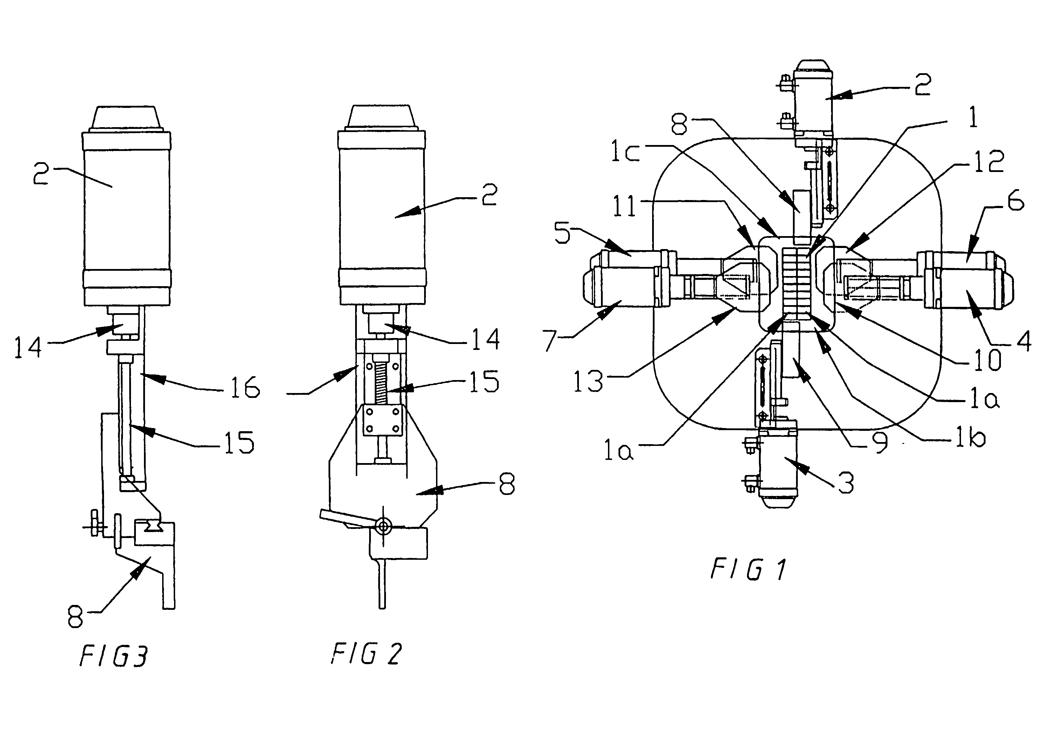

Die Erfindung ist anhand der in den Figuren 1 bis 3 schematisch dargestellten Ausführungsbeispiele näher erläutert.

Figur 1 zeigt eine Ansicht eines Röbelkopfes in Fertigungsrichtung des Röbelstabes bzw. Drilleiters 1. Im weiteren Text wird der Vereinfachung halber von einem Drilleiter gesprochen. Der Drilleiter 1 besteht aus einer Vielzahl von Teilleitern 1a, die in zwei Stapel 1b und 1c aufgeteilt sind. Zum Verröbeln der Teilleiter 1a wird der Stapel 1c nach oben und der Stapel 1b nach unten verschoben. Gleichzeitig wird der in der Figur 1 unterste Teilleiter 1a des Stapels 1b auf den Stapel 1c und der oberste Teilleiter1a des Stapels 1c auf den Stapel 1b verschoben. Dieses Verfahren ist bekannt, es kann entweder mit einer geraden oder mit einer ungeraden Anzahl von Teilleitern 1a durchgeführt werden.

Erfindungsgemäß werden die Stapel 1b und 1c durch die Servomotoren 2 und 3 verschoben. Das Verschieben der Teilleiter 1a auf den benachbarten Stapel 1b und 1c erfolgt durch die Servomotoren 4 und 5. Um eine kurze Kröpfungslänge der Teilleiter 1a zu erreichen, sind zwei weitere Servomotoren 6 und 7 vorgesehen, die den Servomotoren 4 und 5 entgegenwirken.

Jeder der Servomotoren 2 bis 7 treibt wie weiter unten näher beschrieben ein auf den Drilleiter 1 einwirkendes Werkzeug 8 bis 13 an.

Da für alle Antriebe der Mechanismus gleich ist, wird dieser beispielhaft für den Servomotor 2 und das Werkzeug 8 anhand der Figuren 2 und 3 näher verdeutlicht.

Der Rotor 14 des Servomotors 2 ist mit einer Spindel 15 verbunden und treibt diese um ihre Längsachse an. Die Spindel 15 weist bekanntermaßen eine schraubenlinienförmig verlaufende Nut bzw. Erhebung bzw. einen schraubenlinienförmigen Gewindegang auf. Das Werkzeug 8 weist eine nicht näher bezeichnete Bohrung auf, deren innere Oberfläche dem Verlauf der Nut bzw. dem Gewindegang angepaßt ist. Das Werkzeug 8 ist in einer Führung 16 geführt und somit gegen Verdrehen gesichert. Bei Drehung der Spindel 15 wird auf diese Weise eine Drehbewegung in eine translatorische Bewegung umgewandelt, d. h. das Werkzeug 8 wird je nach Drehrichtung von oder zu dem Drilleiter 1 bewegt.

## Patentansprüche

1. Verfahren zur Herstellung von Drilleitern (1) durch Verröbeln von Profildrähten (1a) mit rechteckigem Querschnitt mit einer Führung für die in zwei parallelen Stapeln (1b,1c) geförderten Profildrähte (1e), bei welchem der jeweils zuunterst und zuoberst liegende Profildraht (1a) auf den benachbarten Stapel verschoben und dabei gekröpft wird und der eine Stapel nach oben und der andere Stapel nach unten gedrückt wird, **dadurch gekennzeichnet, daß** das Verschieben der Profildrähte (1a) und das Drücken der Stapel (1b,1c) durch Spindeln (15) erfolgt, von denen jede durch einen Servomotor (2-7) angetrieben wird und daß als Spindeln (15) Kugelrollspindeln verwendet werden, welche die Drehbewegung der Servomotoren (2-7) in translatorische Bewegungen umwandeln.

2. Verfahren nach Anspruch 1, **dadurch gekennzeichnet, daß** jeder Servomotor (2-7) rechnergesteuert wird.

3. Vorrichtung zur Herstellung von Drilleitern (1) durch Verröbeln von Profildrähten (1a) mit rechteckigem Querschnitt, mit einer Führung für die in zwei parallelen Stapeln (1b,1c) geförderten Profildrähte (1a), in welcher der jeweils zuunterst und der zuoberst liegende Profildraht (1a) auf den benachbarten Stapel durch Werkzeuge (8-13) verschoben und dabei gekröpft wird und der eine Stapel nach oben und der andere Stapel nach unten ebenfalls durch Werkzeuge (8-13) gedrückt wird,
**dadurch gekennzeichnet, daß** jeweils ein Servomotor (2 bis 7) zum Antrieb für ein Werkzeug (8 bis 13) vorgesehen ist, dessen Rotor (14) mit einer Spindel (15) verbunden ist, daß jedes Werkzeug (8 bis 13) eine Bohrung aufweist, deren Oberfläche einen der Spindel (15) angepaßten Gewindegang aufweist und daß jedes Werkzeug (8 bis 13) in einer Führung (16) geführt ist.

4. Vorrichtung nach Anspruch 3, **dadurch gekennzeichnet, daß** jedes Werkzeug (8 bis 13) eine Kugelrollspindel (15) aufweist.

5. Vorrichtung nach einem der Ansprüche 3 und 4, **dadurch gekennzeichnet, daß** ein Rechner vorgesehen ist, der den Antrieb der Servomotoren (2 bis 7) in Abhängigkeit von den Parametern für die Drilleiter (1) steuert.

## Claims

1. Method to manufacture transposed conductors (1) by transposing shaped wires (1a) with a rectangular cross-section with a guide for the shaped wires (1e) in two parallel stacks (1b, 1c), whereby the bottom and top shaped wires (1a) are moved onto the neighboring stack and offset, and one stack is pressed up while the other is pressed down, **characterized in that** the shaped wires (1a) are moved, and the stacks (1b, 1c) are pressed by spindles (15), each of which are driven by a servomotor (2-7), and feed screws are used as the spindles (15) that convert the rotation of the servomotors (2-7) into a lateral movement.

2. Method according to claim 1, **characterized in that** each servomotor (2-7) is computer-controlled.

3. Method to manufacture transposed conductors (1) by transposing shaped wires (1a) with a rectangular cross-section using a guide for the shaped wires (1a) conveyed in two parallel stacks (1a, 1b) in which the bottom and top shaped wire (1a) are moved onto the neighboring stack by tools (8-13) and are thereby offset, and one stack is moved up while the other stack is pressed down also by tools (8-13), **characterized in that** a servomotor (2 to 7) is provided as a drive for a tool (8-13) whose rotor (14) is connected to a spindle (15), and that each tool (8 to 13) has a bore hole whose surface has a thread adapted to the spindle (15), and that each tool (8 to 13) is guided in a guide (16).

4. The device according to claim 3, **characterized in that** each tool (8 to 13) has a feed screw (15).

5. Device according to one of claims 3 and 4, charactenzed in that a computer is provided that controls the drive of the servomotors (2 to 7) depending on the parameters for the transposed conductors (1).

## Revendications

1. Procédé pour la fabrication de conducteurs torsadés (1) par transposition selon le principe de Roebel de fils profilés (1a) de section rectangulaire avec un guidage pour les fils profilés (1a) amenés sous forme de deux piles parallèles (1b, 1c) dans lequel les fils profilés (1a) se trouvant en dessous et en dessus sont poussés sur la pile voisine en étant ondulés, l'une des piles étant poussée vers le haut et l'autre vers le bas, **caractérisé en ce que** le déplacement des fils profilés (1a) et la compression des piles (1b, 1c) sont réalisés par des vis (15) dont chacune est commandée par un servomoteur (2-7) et que les vis (15) utilisées sont des vis à billes qui transforment le mouvement rotatif des servomoteurs (2-7) en un mouvement de translation.

2. Procédé suivant la revendication 1, **caractérisé en ce que** tous les servomoteurs (2-7) sont commandés par ordinateur.

3. Dispositif pour la fabrication de conducteurs torsadés (1) par transposition de fils profilés (1a) de section rectangulaire, avec un guidage pour les fils profilés (1a) amenés sous forme de deux piles parallèles (1b, 1c) dans lequel les fils profilés (1a) se trouvant en dessous et en dessus sont poussés par des outils (8-13) sur la pile voisine en étant ondulés et dans lequel l'une des piles étant poussée vers le haut et l'autre vers le bas par des outils (8-13), **caractérisé en ce que** pour la commande de chaque outil (8-13) est prévu un servomoteur (2 à 7), dont le rotor (14) est relié à une vis (15), que chaque outil (8 à 13) est muni d'un trou présentant a sa surface un pas de vis adapté à la vis (15) et que chaque outil (8 à 13) est guidé dans un guidage (16).

4. Dispositif suivant la revendication 3, **caractérisé en ce que** chaque outil (8 à 13) comporte une vis à billes (15).

5. Dispositif suivant l'une des revendications 3 et 4, **caractérisé en ce que** qu'un ordinateur est prévu pour commander les servomoteurs (2 a 7) en fonction des paramètres des conducteurs torsadés (1).
